(19)

**Europäisches Patentamt**
**European Patent Office**
**Office européen des brevets**

(11) **EP 4 714 717 A1**

(12) **EUROPEAN PATENT APPLICATION**

(43) Date of publication:
25.03.2026 Bulletin 2026/13

(21) Application number: 25157392.9

(22) Date of filing: 12.02.2025

(51) International Patent Classification (IPC):
**B60L 3/12** (2006.01)　　**B60L 7/22** (2006.01)
**B60L 7/26** (2006.01)　　**B60L 15/20** (2006.01)
**B60L 58/15** (2019.01)　　**B60W 30/18** (2012.01)

(52) Cooperative Patent Classification (CPC):
**B60L 3/12; B60L 7/22; B60L 7/26; B60L 15/2018;**
**B60L 15/2045; B60L 58/15; B60W 10/08;**
**B60W 10/184; B60W 30/18127; B60W 50/0097;**
B60L 2240/12; B60L 2240/26; B60L 2240/36;
B60L 2240/642; B60L 2240/68;　　(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 24.09.2024 KR 20240129272

(71) Applicants:
• **Hyundai Motor Company**
**Seoul 06797 (KR)**
• **Kia Corporation**
**Seoul 06797 (KR)**

(72) Inventors:
• **KIM, Jin Yong**
**Hwaseong-si, Gyeonggi-do (KR)**
• **NA, Chang Eun**
**Hwaseong-si, Gyeonggi-do (KR)**
• **PARK, Jin Hui**
**Hwaseong-si, Gyeonggi-do (KR)**

(74) Representative: **Viering, Jentschura & Partner**
**mbB**
**Patent- und Rechtsanwälte**
**Am Brauhaus 8**
**01099 Dresden (DE)**

(54) **APPARATUS AND METHOD FOR CONTROLLING VEHICLE BRAKING USING BLENDING OF REGENERATIVE BRAKING AND AUXILIARY BRAKING**

(57)　An apparatus for controlling vehicle braking using blending of regenerative braking and auxiliary braking is provided. The apparatus includes an information input unit configured to receive vehicle travel information, a first energy determination unit configured to determine, based on the vehicle travel information, expected charging energy on a travel road, a second energy determination unit configured to determine, based on the vehicle travel information, chargeable energy available by regenerative braking, when a current travel road is a downhill road, and a vehicle control unit configured to control vehicle braking by comparing the expected charging energy with the chargeable energy, and determining a blending mode of blending an amount of operation of regenerative braking and an amount of operation of auxiliary braking as a braking mode according to a result of comparison.

FIG. 1

EP 4 714 717 A1

(52) Cooperative Patent Classification (CPC): (Cont.)
B60L 2240/80; B60L 2260/54; B60W 2510/244;
B60W 2520/10; B60W 2552/15; B60W 2554/406;
B60W 2555/60; B60W 2556/50; B60Y 2300/89

**Description**

**CROSS-REFERENCE TO RELATED APPLICATION(S)**

This application claims the benefit of priority to Korean Patent Application No. 10-2024-0129272 filed on September 24, 2024, in the Korean Intellectual Property Office, the disclosure of which is incorporated herein by reference in its entirety.

**TECHNICAL FIELD**

The present disclosure relates to an apparatus and method for controlling vehicle braking using blending of regenerative braking and auxiliary braking.

**BACKGROUND**

In general, commercial eco-friendly vehicles such as electric vehicles or hydrogen powdered vehicles may use a retarder, a regenerative braking or auxiliary braking device, to maintain speed when travelling on a downhill road.
However, in order to maintain speed on a downhill road, existing vehicles may operate with a predetermined logic regardless of a downhill condition, and may operate with regenerative braking priority or retarder priority.
A braking operation in an existing vehicle may have poor regenerative braking power generation output when using a retarder with priority, and may have poor auxiliary braking continuity performance when using regenerative braking with priority.

**SUMMARY**

The present disclosure provides an apparatus and method for controlling vehicle braking using blending of regenerative braking and auxiliary braking, the apparatus and method capable of performing vehicle braking by blending an amount of operation of regenerative braking and an amount of operation of auxiliary braking (e.g., a retarder) in an appropriate ratio according to a vehicle condition and a road condition when travelling on a downhill road.
However, the present disclosure is not limited to those set forth herein, and other aspects set forth herein will be understood from the description herein.
According to the present disclosure, there is provided an apparatus for controlling vehicle braking using blending of regenerative braking and auxiliary braking. The apparatus includes an information input unit configured to receive vehicle travel information, a first energy determination unit configured to determine, based on the vehicle travel information, expected charging energy (E1) on a travel road, a second energy determination unit configured to determine, based on the vehicle travel information, chargeable energy (E2) available by regenerative braking, when a current travel road is a downhill road, and a vehicle control unit configured to control vehicle braking by comparing the expected charging energy (E1) with the chargeable energy (E2), and determining a blending mode of blending an amount of operation of regenerative braking and an amount of operation of auxiliary braking as a braking mode according to a result of comparison.
The first energy determination unit may include a speed limit determination unit configured to determine, based on the vehicle travel information including at least one of vehicle state information or navigation information, whether there is forward congestion or a vehicle speed limit, and an expected charging energy determination unit configured to determine the expected charging energy (E1) using a battery output (e.g., obtained) based on an actual travelling speed or an expected travelling speed, depending on whether there is the forward congestion or the vehicle speed limit.
The expected charging energy determination unit may include a battery output calculation unit configured to obtain, based on the vehicle travel information, motor output, using an actual travelling speed or an expected travelling speed and traction force on a slope of the current travel road, and to obtain a battery output, auxiliary machinery output, and battery efficiency, and an expected charging energy calculation unit configured to obtain the expected charging energy (E1) using the (e.g., required) battery output and travel time.
The second energy determination unit may include a downhill determination unit configured to determine a current travel road as a downhill road when a value of the expected charging energy is less than or equal to zero, an SOC conversion unit configured to convert the expected charging energy into an SOC(%) when the current travel road is the downhill road, and a chargeable energy calculation unit configured to obtain the chargeable energy (E2) using a maximum SOC(%) and a current SOC(%) of a battery of a vehicle.
The chargeable energy calculation unit may be configured to calculate the chargeable energy (E2) by subtracting the current SOC(%) from the maximum SOC(%) using Equation 1 below.

[Equation 1]

$$E2 = SOCmax(\%) - SOCcur(\%)$$

In Equation 1, SOCmax may be a maximum SOC(%) and SOCcur may be a current SOC(%).

The battery output calculation unit may be configured to calculate the (e.g., required) battery output using (e.g., required) traction force, motor output, and battery efficiency, using Equations 2, 3, and 4 below.

$$[\text{Equation 2}] \quad Ft \geq ( Fdrag + Froll + Fgrade )$$

$$[\text{Equation 3}] \quad Mout = Ft * (V1 \text{ or } V2)(m/s)$$

$$[\text{Equation 4}] \quad Bout = (Mout + Aout) * BE$$

In an example embodiment, in Equation 4, BE may be a number or integer, such as 0.92.

In Equations 2, 3, and 4, Ft may be (e.g., required) traction force, Fdrag, Froll, and Fgrade may respectively be air drag force, rolling resistance force, and gradability force received by a vehicle travelling on a road having an inclination angle $\theta$, Mout may be motor output, V may be a travelling speed, V1 and V2 may be an actual travelling speed and an expected travelling speed, Bout may be a (e.g., required) battery output, Aout may be auxiliary machinery output, and BE may be battery efficiency.

The expected charging energy calculation unit may be configured to calculate, based on the (e.g., required) battery output and travel time, the expected charging energy (E1) according to Equation 5 below.

$$[\text{Equation 5}] \quad E1 = Bout * Td (= Ld/V(V1 \text{ or } V2))(m/s))$$

In Equation 5, E1 may be expected charging energy, Bout may be a (e.g., required) battery output, Td may be a travel distance, Ld may be a downhill distance, V may be a travelling speed (e.g., V1 or V2), and V1 and V2 may be an actual travelling speed and an expected travelling speed.

The vehicle control unit may include an energy comparison unit configured to compare the expected charging energy (E1) and the chargeable energy (E2) with each other, a braking mode determination unit configured to determine the braking mode as a regenerative braking priority mode when a value of the expected charging energy (E1) is less than or equal to a value of the chargeable energy (E2), and to determine the braking mode as the blending mode when the value of the expected charging energy (E1) is greater than the value of the chargeable energy (E2), as a result of comparison performed by the energy comparison unit, and a braking control unit configured to control vehicle braking on the current travel road according to the determined braking mode.

The vehicle control unit may further include an unchargeable energy calculation unit configured to obtain unchargeable energy (E3) by subtracting the chargeable energy (E2) from the expected charging energy (E1), and a blending ratio determination unit configured to determine a ratio of the chargeable energy (E2) to the unchargeable energy (E3) as a blending ratio in the blending mode for blending regenerative braking and auxiliary braking.

The vehicle control unit may be configured to control an operation of a cooling system for cooling an auxiliary braking device operating while braking is performed in the blending mode.

According to the present disclosure, there is provided a method for controlling vehicle braking using blending of regenerative braking and auxiliary braking, the method including an information reception step of receiving vehicle travel information, a first energy determination step of determining, based on the vehicle travel information, expected charging energy (E1) on a travel road, a second energy determination step of determining, based on the vehicle travel information, chargeable energy (E2) available by regenerative braking, when a current travel road is a downhill road, and a vehicle braking control step of controlling vehicle braking by comparing the expected charging energy (E1) with the chargeable energy (E2), and determining a blending mode of blending an amount of operation of regenerative braking and an amount of operation of auxiliary braking as a braking mode according to a result of comparison.

The first energy determination step may include a speed limit determination step of determining, based on the vehicle travel information including at least one of vehicle state information or navigation information, whether there is forward congestion or a vehicle speed limit, and an expected charging energy determination step of determining the expected charging energy (E1) using a (e.g., required) battery output obtained based on an actual travelling speed or an expected travelling speed, depending on whether there is the forward congestion or the vehicle speed limit.

The expected charging energy determination step may include a battery output calculation step of obtaining, based on the vehicle travel information, motor output, using an actual travelling speed or an expected travelling speed and traction force on a slope (e.g., a downhill road) of the current travel road, and obtaining a (e.g., required) battery output using motor output, auxiliary machinery output, and battery efficiency, and an expected charging energy calculation step of obtaining the expected charging energy (E1) using the (e.g., required) battery output and travel time.

The second energy determination step may include a downhill determination step of determining the current travel road as the downhill road when a value of the expected charging energy is less than or equal to zero, an SOC conversion step of converting the expected charging energy (E1) into an SOC(%) when the current travel road is the downhill road, and a chargeable energy calculation step of calculating the chargeable energy (E2) using a maximum SOC(%) and a current SOC(%) of a battery of a vehicle.

The chargeable energy calculation unit may be configured to calculate the chargeable energy (E2) by subtracting the current SOC(%) from the maximum SOC(%) using Equation 1 below.

$$[Equation\ 1]$$

$$E2 = SOCmax(\%) - SOCcur(\%)$$

The battery output calculation step may include calculating the (e.g., required) battery output using (e.g., required) traction force, motor output, and battery efficiency, using Equations 2, 3, and 4 below.

$$[Equation\ 2]\ Ft\ \geq\ (Fdrag + Froll + Fgrade)$$

$$[Equation\ 3]\ Mout = Ft * (V1\ or\ V2)(m/s)$$

$$[Equation\ 4]\ Bout = (Mout + Aout) * BE$$

In an example embodiment, in Equation 4, BE may be 0.92.

In Equations 2, 3, and 4, Ft may be (e.g., required) traction force, Fdrag, Froll, and Fgrade may be respectively air drag force, rolling resistance force, and gradability force received by a vehicle travelling on a road having an inclination angle θ, Mout may be motor output, V may be a travelling speed, V1 and V2 may be an actual travelling speed and an expected travelling speed, Bout may be a (e.g., required) battery output, Aout may be auxiliary machinery output, and BE may be battery efficiency.

The expected charging energy calculation step may include calculating, based on the (e.g., required) battery output and travel time, the expected charging energy (E1) according to Equation 5 below.

$$[Equation\ 5]\ E1 = Bout * Td\ (Td= Ld/V(V1\ or\ V2))(m/s)$$

In Equation 5, E1 may be expected charging energy, Bout may be a (e.g., required) battery output, Td may be a travel distance, Ld may be a downhill distance, V may be a travelling speed, and V1 and V2 may be an actual travelling speed and an expected travelling speed.

The vehicle braking control step may include an energy comparison step of comparing the expected charging energy (E1) and the chargeable energy (E2) with each other, a braking mode determination step of determining the braking mode as a regenerative braking priority mode when a value of the expected charging energy (E1) is less than or equal to a value of the chargeable energy (E2), and to determine the braking mode as the blending mode when the value of the expected charging energy (E1) is greater than the value of the chargeable energy (E2), as a result of comparison performed by the energy comparison step, and a braking control step of controlling vehicle braking on the current travel road according to the determined braking mode.

The vehicle braking control step may further include an unchargeable energy calculation step of obtaining unchargeable energy (E3) by subtracting the chargeable energy (E2) from the expected charging energy (E1), and a blending ratio determination step of determining a ratio of the chargeable energy (E2) to the unchargeable energy (E3) as a blending ratio in the blending mode for blending regenerative braking and auxiliary braking.

The vehicle braking control step may include controlling an operation of a cooling system for cooling an auxiliary braking device operating while braking is performed in the blending mode.

In addition, the present disclosure is not limited to the above-described aspects, and other aspects may be (e.g., additionally) understood in the process described below.

According to example embodiments of the present disclosure, an amount of operation of regenerative braking and an amount of operation of auxiliary braking (e.g., a retarder) may be blended in an appropriate ratio according to a vehicle condition and a road condition, based on vehicle state information and navigation information, when travelling on a downhill road. Accordingly, power generation performance (e.g., energy efficiency performance) may be improved using regenerative braking, and the continuity performance of braking may be improved. In addition, a cooling system may be operated in advance when using a blending technique of regenerative braking/auxiliary braking, thereby increasing the time to use regenerative braking.

However, the various and beneficial improvements and effects of the present disclosure are not restricted to those set forth herein, and may be understood from the description and embodiments herein.

**BRIEF DESCRIPTION OF DRAWINGS**

The above and other aspects, features, and improvements of the present disclosure may be understood from the detailed description, taken in conjunction with the accompanying drawings, in which:

FIG. 1 is an exemplary diagram of a configuration of a vehicle braking control apparatus using a blending of regenerative braking and auxiliary braking according to an example embodiment of the present disclosure;

FIG. 2 is an exemplary diagram of a first energy determination unit;

FIG. 3 is an exemplary diagram of an expected charging energy determination unit;

FIG. 4 is an exemplary diagram of a second energy determination unit;

FIG. 5 is an exemplary diagram of a chargeable energy calculation unit;

FIG. 6 is an exemplary diagram of a battery output calculation unit;

FIG. 7 is a diagram of travel resistance force with respect to stop frictional force;

FIG. 8 is an exemplary diagram of an expected charging energy calculation unit;

FIG. 9 is an exemplary diagram of a vehicle control unit;

FIG. 10 is another exemplary diagram of a vehicle control unit;

FIG. 11 is a diagram of (e.g., required) torque and actual torque of a retarder according to a cooling water temperature;

FIG. 12A is a diagram of a braking-possible distance according to a regenerative braking priority mode, and FIG. 12B is a diagram of a braking-possible distance according to a blending mode;

FIG. 13 is a diagram of an operation in which a vehicle control unit controls a cooling system;

FIG. 14 is a flowchart of a vehicle braking control method using blending of regenerative braking and auxiliary braking according to an example embodiment of the present disclosure;

FIG. 15 is an exemplary diagram of an expected charging energy determination step;

FIG. 16 is an exemplary diagram of a chargeable energy calculation step;

FIG. 17 is an exemplary diagram of a battery output calculation step;

FIG. 18 is an exemplary diagram of an expected charging energy calculation step;

FIG. 19 is an exemplary diagram of a vehicle braking control step;

FIG. 20 is an exemplary diagram of a vehicle braking control step;

FIG. 21 is an exemplary diagram of a vehicle braking control step; and

FIG. 22 is a block diagram of a computing device capable of fully or partially implementing an apparatus and method for controlling vehicle braking using blending of regenerative braking and auxiliary braking according to an example embodiment of the present disclosure.

## DETAILED DESCRIPTION

Herein, specific example embodiments of the present disclosure will be described with reference to the accompanying drawings. The following detailed description provides a method, an apparatus, and/or a system, and is illustrative, but is not limited thereto.

In describing example embodiments of the present disclosure, when it is determined that a detailed description of a technology related to the present disclosure may obscure the gist of the present disclosure, the detailed description thereof will be omitted. In addition, terms to be described below are terms defined in consideration of functions in the present disclosure, which may vary depending on intention or custom of a user or operator. Therefore, the definition of these terms should be made based on the contents throughout the present specification. The terminology used herein is for describing example embodiments and is not to be limiting of the example embodiments. As used herein, the singular forms "a," "an," and "the" are intended to include the plural forms as well, unless the context indicates otherwise. As used herein, the term "and/or" includes any one and any combination of any two or more of the associated listed items. The terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Hereinafter, example embodiments of the present disclosure will be described in more detail with reference to the accompanying drawings.

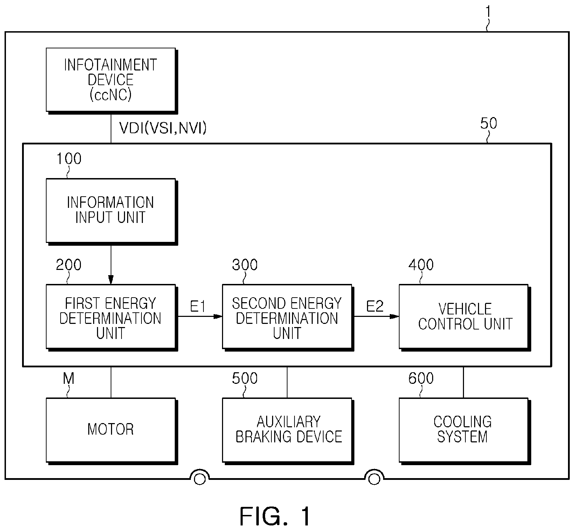

FIG. 1 is an exemplary diagram of a configuration of a vehicle braking control apparatus using blending of regenerative braking and auxiliary braking according to an example embodiment of the present disclosure.

Referring to FIG. 1, a vehicle braking control apparatus 50 uses blending of regenerative braking and auxiliary braking according to an example embodiment of the present disclosure. The vehicle braking control apparatus 50 may include an information input unit 100, a first energy determination unit 200, a second energy determination unit 300, and a vehicle control unit 400, mounted on a vehicle 1.

The information input unit 100 may receive vehicle travel information VDI. For example, the information input unit 100 may be an input interface capable of receiving various types of pieces of information included in the vehicle travel information VDI from an infotainment device (e.g., connected car Navigation Cockpit (ccNC)), and the information is not limited to the infotainment device (ccNC), but may be received through various types of sensors, other external devices, communication networks, or the like.

For example, the vehicle travel information VDI may include at least one of vehicle state information VSI and navigation information NVI. The vehicle state information VSI may include a vehicle weight, a vehicle speed, an auxiliary braking operation state, and a speed maintenance function operation state when a vehicle travels. The navigation information NVI may include a gradient of a current travel road, a travel length, a travelling speed (V1), travel time (Td), and vehicle speed limit information and forward congestion information on a travel road, and the vehicle state information VSI and the navigation information NVI are not limited to the above-described examples.

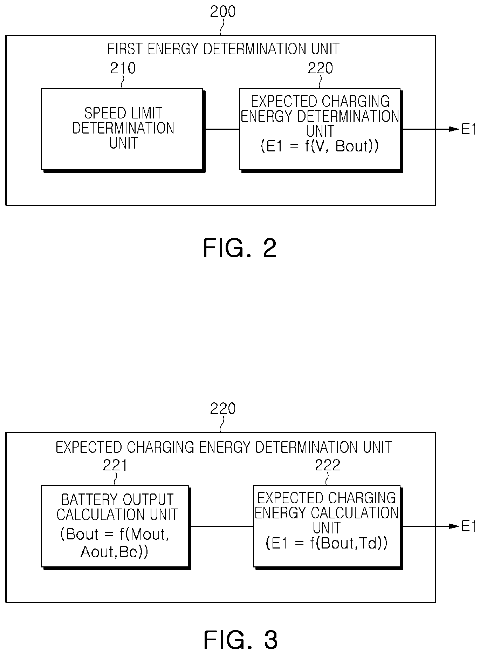

The first energy determination unit 200 may determine, based on the vehicle travel information, expected charging energy (E1) on a travel road. For example, the expected charging energy (E1) may be energy calculated using the vehicle travel information, and may be charging energy expected to be secured by charging due to a current travel condition of a vehicle on the travel road. Such a configuration will be described with reference to FIGS. 2, 3, and 6 to 8.

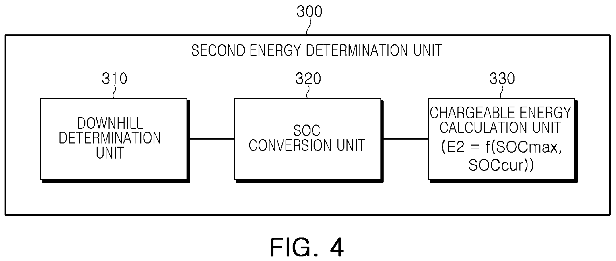

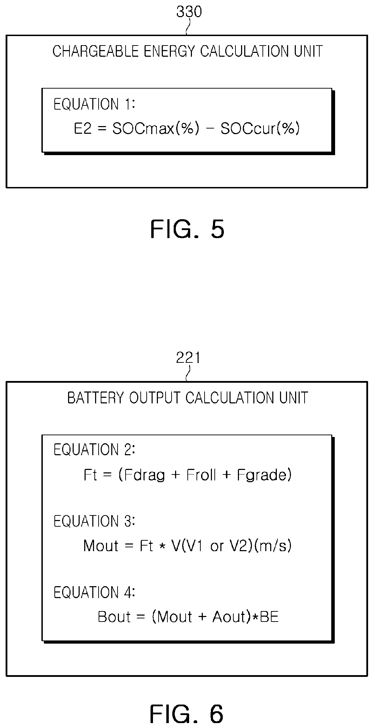

When the current travel road is a downhill road, the second energy determination unit 300 may determine, based on the vehicle travel information VDI, chargeable energy (E2) available by regenerative braking. For example, the chargeable energy (E2) may be charging energy that may be secured by charging (e.g., only) with regenerative braking. Such a configuration will be described with reference to FIGS. 4 and 5.

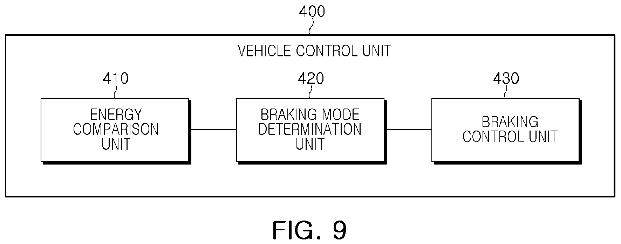

The vehicle control unit 400 may compare the expected charging energy (E1) with the chargeable energy (E2), and may determine a blending mode of blending an amount of operation of regenerative braking and an amount of operation of auxiliary braking as a braking mode according to a result of comparison, and may control vehicle braking. For example, according to the result of the comparison, the blending mode of blending the amount of operation of regenerative braking and the amount of operation of auxiliary braking may be determined as the braking mode. Conversely, a regenerative braking priority mode may be determined as the braking mode. Such a configuration will be described with reference to FIGS. 9 to 13.

For example, the vehicle control unit 400 may be an electronic control unit (ECU) or a vehicle control unit (VCU) of the vehicle 1. For another example, the vehicle control unit 400 may at least receive information from the electronic control unit (ECU) or the vehicle control unit (VCU), but the present disclosure is not limited thereto.

In the present disclosure, each of the information input unit 100, the first energy determination unit 200, the second energy determination unit 300, and the vehicle control unit 400 may be implemented as an individual processor or may be implemented as a single integrated processor, and is not limited thereto.

In addition, each of the information input unit 100, the first energy determination unit 200, the second energy determination unit 300, and the vehicle control unit 400 may be implemented as hardware element(s) or software element(s) or a combination thereof in at least one integrated circuit (IC) embedded in the vehicle braking control apparatus 50, but the present disclosure is not limited thereto.

In FIG. 1, a motor M may be a motor providing driving force and regenerative braking force for travelling of a vehicle. An auxiliary braking device 500 may be a device used in a vehicle (e.g., a middle or large-sized vehicle), such as a truck or a bus to provide auxiliary braking, and may be, for example, a retarder. A cooling system 600 may be a device for cooling cooling water of a retarder, an auxiliary braking device.

In the figures of the present disclosure, repeated descriptions of components having the same reference numeral and the same function may be omitted; however, the differences between the drawings may be described.

FIG. 2 is an exemplary diagram of a first energy determination unit.

Referring to FIG. 2, the first energy determination unit 200 may include a speed limit determination unit 210 and an expected charging energy determination unit 210.

The speed limit determination unit 210 may determine, based on the vehicle state information VSI and the navigation information NVI, whether there is forward congestion or a vehicle speed limit. For example, the forward congestion may be determined based on the navigation information NVI depending on whether a travelling speed of another vehicle on a road on which a vehicle is travelling is less than or equal to a reference congestion speed, and the vehicle speed limit may be determined based on the navigation information NVI depending on whether there is a speed limit on the road on which the vehicle is travelling.

The expected charging energy determination unit 210 may determine the expected charging energy (E1) using a (e.g., required) battery output (Bout) (see Equation 4 below) obtained based on an actual travelling speed (V1), corresponding to a travelling speed (V1), or an expected travelling speed (V2) depending on whether there is the front congestion or the vehicle speed limit. For example, when there is no front congestion or vehicle speed limit, the expected charging energy (E1) may be determined based on the actual travelling speed (V1), a current travelling speed. Conversely, when there is the front congestion or the vehicle speed limit, the expected charging energy (E1) may be determined based on the expected travelling speed (V2) expected depending on whether the front congestion or the vehicle speed limit. Such a configuration will be described with reference to FIG. 3.

FIG. 3 is an exemplary diagram of an expected charging energy determination unit.

Referring to FIG. 3, the expected charging energy determination unit 210 may include a battery output calculation unit 221 and an expected charging energy calculation unit 222.

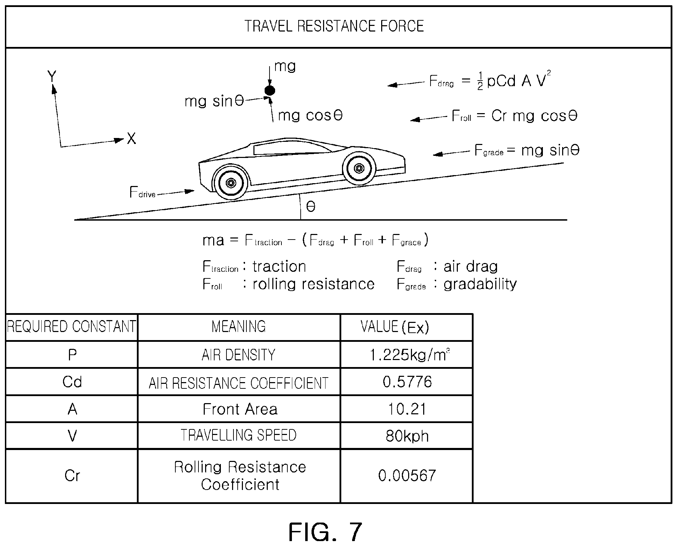

The battery output calculation unit 221 may obtain, based on the vehicle state information VSI and the navigation information NVI, motor output (Mout) using a travelling speed (V) (e.g., an actual travelling speed (V1) or an expected travelling speed (V2)) and traction force (Ft) on a slope (e.g., a downhill road) of a current travel road, and may obtain a (e.g., required) battery output (Bout) using motor output (Mout), auxiliary machinery output (Aout), and battery efficiency (BE). For example, motor output (Mout) may be obtained by calculating the traction force (Ft) and the travelling speed (V) (V1 or V2), and the traction force (Ft) may be obtained using travel resistance force. Such a configuration will be described with reference to FIGS. 6 and 7.

The expected charging energy calculation unit 222 may calculate expected charging energy (E1) using the (e.g., required) battery output (Bout) and travel time (Td). For example, the expected charging energy (E1) may be obtained by calculating the (e.g., required) battery output (Bout) and the travel time (Td).

FIG. 4 is an exemplary diagram of a second energy determination unit.

Referring to FIG. 4, the second energy determination unit 300 may include a downhill determination unit 310, an SOC conversion unit 320, and a chargeable energy calculation unit 330.

When a value of the expected charging energy (E1) is equal to or less than zero, the downhill determination unit 310 may determine a current travel road as a downhill road. For example, when the travel road is a downhill road, battery output energy expected to be used may not be (e.g., required), such that the expected charging energy (E1) may be equal to or less than zero.

The SOC conversion unit 320 may convert the expected charging energy (E1) into an SOC(%) when the current travel road is a downhill road. The SOC(%) may be obtained by dividing a total amount of battery charging energy by a capacity of a vehicle battery and multiplying a value obtained by performing division by 100 (total amount of battery charging energy / capacity of the vehicle battery). For example, chargeable energy (E2) to be described below may be an SOC(%). Thus, in order to compare the expected charging energy (E1) with the chargeable energy (E2), the expected charging energy (E1) may be converted into an SOC(%).

In addition, the chargeable energy calculation unit 330 may calculate the chargeable energy (E2) using a maximum SOC(SOCmax)(%) and a current SOC(SOCcur)(%) of a battery of a vehicle 1 (see FIG. 1). Here, the maximum SOC(SOCmax)(%) and the current SOC(SOCcur)(%) may be information included in the vehicle state information VSI.

For example, the chargeable energy (E2) may be obtained by calculating the maximum SOC(SOCmax)(%) and the current SOC(SOCcur)(%). Such a configuration will be described with reference to FIG. 5.

FIG. 5 is an exemplary diagram of a chargeable energy calculation unit.

Referring to FIG. 5, the chargeable energy calculation unit 330 may calculate the chargeable energy (E2) by subtracting the current SOC(SOCcur)(%) from the maximum SOC(SOCmax)(%), as indicated in Equation 1 below.

$$[\text{Equation 1}]$$

$$\text{Chargeable energy (E2)} = \text{SOCmax}(\%) - \text{SOCcur}(\%)$$

For example, when the maximum SOC(SOCmax)(%) is an SOC of 95% and the current SOC(SOCcur) (%) is an SOC of 60%, the chargeable energy (E2) may be 35% (e.g., =95%-60%). For another example, when the maximum SOC(SOCmax)(%) is 95% and the current SOC(SOCcur)(%) is an SOC of 85%, the chargeable energy (E2) may be 10% (e.g., =95%-85%).

FIG. 6 is an exemplary diagram of a battery output calculation unit. FIG. 7 is a diagram of travel resistance force to describe stop frictional force.

Referring to FIGS. 6 and 7, the battery output calculation unit 221 may calculate a (e.g., required) battery output (Bout) using (e.g., required) traction force (Ft), motor output (Mout), and battery efficiency (BE) using Equations 2, 3, and 4.

$$[\text{Equation 2}] \quad \text{Ft} \geq (\text{Fdrag} + \text{Froll} + \text{Fgrade})$$

$$[\text{Equation 3}] \quad \text{Mout} = \text{Ft} * \text{V(V1 or V2)(m/s)}$$

$$[\text{Equation 4}] \quad \text{Bout} = (\text{Mout} + \text{Aout}) * \text{BE}$$

In an example embodiment, in Equation 4, BE may be 0.92.

In Equations 2, 3, and 4, m may be a vehicle weight, a may be acceleration, Ft may be traction force, Fdrag, Froll, and Fgrade may be respectively air drag force, rolling resistance force (e.g., rolling coefficient (Cr)), and gradability force received by a vehicle travelling on a road having an inclination angle $\theta$, Mout may be motor output, Ft may be (e.g., required) traction force, V may be a travelling speed (e.g., V1 or V2), V1 and V2 may be an actual travelling speed and an expected travelling speed, Bout may be (e.g., required) battery output, "Aout" may be auxiliary machinery output, and "BE" may be battery efficiency.

For example, when a (e.g., required) traction force (Ft) is -8308N (see Equation 2) and a travelling speed (V) is 80 kph (80000/(60*60)m/s=22.22m/s), motor output (Mout) may be about -184603 W (see Equation 3). When battery efficiency (BE) is 92%, and auxiliary machinery output (Aout) is 10000 W, a (e.g., required) battery output (Bout) may be about -160635 W (see Equation 4). Such calculation examples are examples for description and understanding, but the present disclosure is not limited thereto.

Referring to FIG. 7, travel resistance force of a vehicle 1 traveling on a slope having an inclination angle $\theta$ will be described. When a weight (m) of the vehicle 1 is affected by gravitational acceleration (g=9.8 m/s2), the (e.g., required) traction force (Ft) may be greater than three travel resistance forces, such as air drag force (Fdrag), rolling resistance force (Froll), and gradability force (Fgrade) (Ft $\geq$ (Fdrag + Froll + Fgrad). In this embodiment, the vehicle 1 may travel. The (e.g., required) traction force (Ft) may be travel force (Ft). In an example embodiment, the air drag force, the rolling resistance force, and the gradability force may (e.g., all) be general matters, and thus a detailed description thereof is omitted.

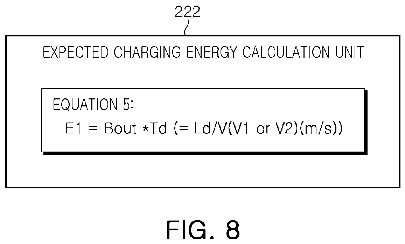

FIG. 8 is an exemplary diagram of an expected charging energy calculation unit.

Referring to FIG. 8, the expected charging energy calculation unit 222 may calculate, based on the (e.g., required) battery output (Bout) and the travel time (Td), the expected charging energy (E1) according to Equation 5 below.

$$[\text{Equation 5}] \quad \text{E1} = \text{Bout} * \text{Td} (= \text{Ld/V(V1 or V2)(m/s)})$$

In Equation 5, E1 may be expected charging energy, Bout may be a (e.g., required) battery output, Td may be a travel distance, Ld may be a downhill distance, V may be a travelling speed (e.g., V1 or V2), and V1 or V2 may be a travelling speed (hereinafter, referred to as V).

For example, the expected charging energy (E1) may be 27.9% as an SOC(%).

FIG. 9 is an exemplary diagram of a vehicle control unit.

Referring to FIG. 9, the vehicle control unit 400 may include an energy comparison unit 410, a braking mode determination unit 420, and a braking control unit 430.

For example, the energy comparison unit 410 may compare the expected charging energy (E1) with the chargeable energy (E2). For example, the comparison unit 410 may compare whether the expected charging energy (E1) is less than or equal to the chargeable energy (E2), or is greater than the chargeable energy (E2).

As a result of comparison performed by the energy comparison unit 410, the braking mode determination unit 420 may determine the braking mode as a regenerative braking priority mode when the expected charging energy (E1) is less than or equal to the chargeable energy (E2), and may determine the braking mode as the blending mode when the expected charging energy (E1) is greater than the chargeable energy (E2).

In addition, the braking control unit 430 may control, based on the determined braking mode, vehicle braking on a current travel road. For example, the braking control unit 430 may perform braking control in the regenerative braking priority mode when the braking mode is determined as the regenerative braking priority mode, and the braking control may be performed in the blending mode when the braking mode is determined as the blending mode.

For example, when braking is controlled in the blending mode, a blending ratio between regenerative braking and auxiliary braking may need to be determined. Such a configuration will be described with reference to 10.

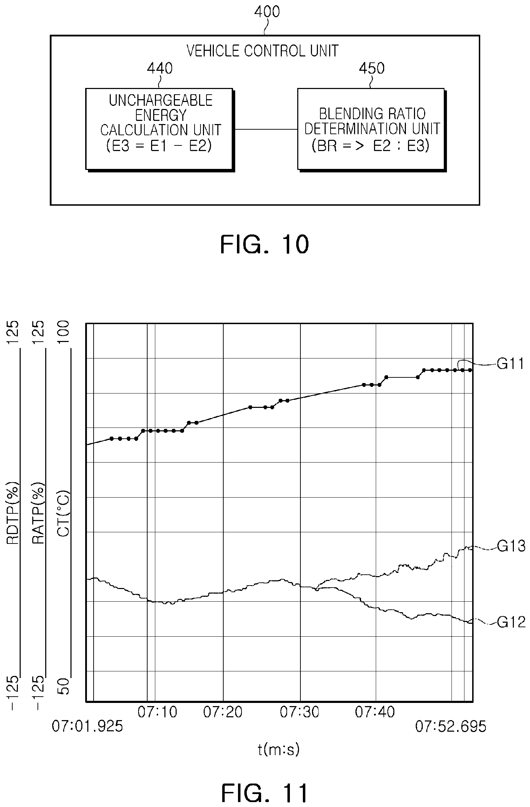

FIG. 10 is another exemplary diagram of a vehicle control unit.

Referring to FIG. 10, the vehicle control unit 400 may include an unchargeable energy calculation unit 440 and a blending ratio determination unit 450.

The unchargeable energy calculation unit 440 may obtain unchargeable energy (E3) by subtracting the chargeable energy (E2) from the expected charging energy (E1). For example, the unchargeable energy (E3) may correspond to energy that is not chargeable (e.g., only) with regenerative braking, and thus may correspond to energy requiring auxiliary braking. For example, when the expected charging energy (E1) is 27.9% and the chargeable energy (E2) is 10%, the unchargeable energy (E3) may be 17.9%. For example, an auxiliary braking device may be a retarder. Hereinafter, for ease of description and understanding, the auxiliary braking device may be described as an example.

In addition, the blending ratio determination unit 450 may determine a ratio of the chargeable energy (E2) to the unchargeable energy (E3) as a blending ratio (BR) in the blending mode for blending regenerative braking and auxiliary braking. For example, when the ratio of the chargeable energy (E2) to the unchargeable energy (E3) is 10% to 17.9%, the blending ratio (BR) in the blending mode may be 35.84 (E2) to 64.15 (E3) as a percentage.

FIG. 11 is an exemplary diagram of (e.g., required) torque and actual torque of a retarder according to a cooling water temperature.

In the graph illustrated in FIG. 11, vertical axes may (e.g., sequentially) represent a (e.g., required) driving torque percentage (RDTP)(%) of a retarder, an auxiliary braking device, an actual torque percentage (RAPT)(%) of the retarder, and a cooling water temperature (CT)(°C). A horizontal axis may represent time (t(m:s)), and the unit thereof may be millisecond (ms). In addition, G11 may be a cooling water temperature graph, G12 may be (e.g., required) driving torque of the retarder, and G13 may be actual torque of the retarder.

Referring to the graph in FIG. 11, when the retarder is (e.g., continuously) operated, a cooling water temperature (see G11) may (e.g., graduall)y increase. Accordingly, it may be confirmed that the actual torque (see G13) of the retarder fails to keep up with the driving demand torque (see G12) of the retarder and the actual torque (see G13) falls.

Accordingly, it may be confirmed that it is necessary to travel on a downhill road such that cooling is properly performed, in order to (e.g., continuously) use the retarder.

In addition, in eco-friendly vehicles, it may be useful (e.g., necessary) to charge a battery by maximal use of regenerative braking on a downhill road, in order to improve fuel efficiency.

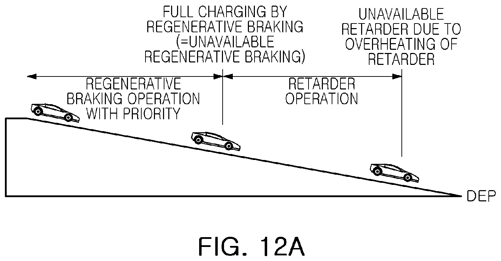

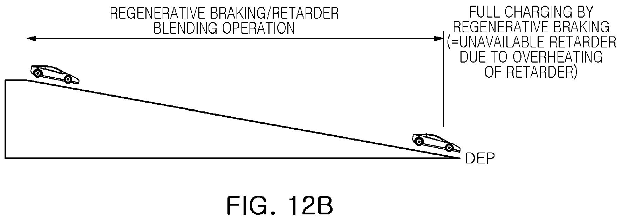

FIG. 12A is a diagram of a braking-possible distance according to a regenerative braking priority mode, and FIG. 12B is a diagram of a braking-possible distance according to a blending mode.

The diagrams in FIGS. 12A and 12B may be, for example, diagrams of a regenerative braking priority mode and a blending mode when a downhill distance is 10 km and a road slope (road gradient) is lowered to -4%.

With reference to FIG. 12A, a retarder operation performed after a regenerative mode priority operation will be described below. Regenerative braking may operate with priority, and a retarder may operate at a point in time at which regenerative braking is not available due to full charging by regenerative braking. Then, at a point in time at which the retarder is not available due to overheating of the retarder, a vehicle may be before a downhill road end point (DEP). Thus, even when there is still braking distance remaining, retarder braking may be terminated.

With reference to FIG. 12B, a case will be described below in which a vehicle travels on a downhill road while braking is performed in a blending mode of blending regenerative braking and retarder braking. It may be confirmed that cooling time may be secured using a retarder from the beginning, thereby increasing continuity performance and maximally charging a battery by regenerative braking at a downhill road end point (DEP). In the blending mode of the present disclosure, the downhill end point (DEP) may be a point at which regenerative braking is fully charged or a point at which the retarder is not available due to overheating of the retarder.

Accordingly, it may be confirmed that when a vehicle travels on a downhill road in the blending mode of the present disclosure, the vehicle may travel down while performing braking in the blending mode during the entire downhill end point DEP.

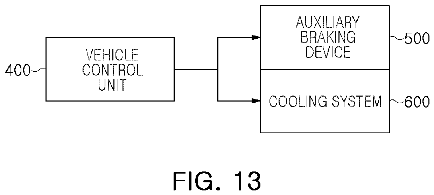

FIG. 13 is a diagram of an operation in which a vehicle control unit controls a cooling system.

Referring to FIG. 13, the vehicle control unit 400 may control an operation of the cooling system 600 for cooling the auxiliary braking device 500 operating while braking is performed in the blending mode.

Accordingly, cooling water of the auxiliary braking device 500 may be cooled, thereby delaying time (e.g., required) for the cooling water of the auxiliary braking device 500 to reach a temperature at which a retarder is unavailable, thereby extending time to use the auxiliary braking device 500.

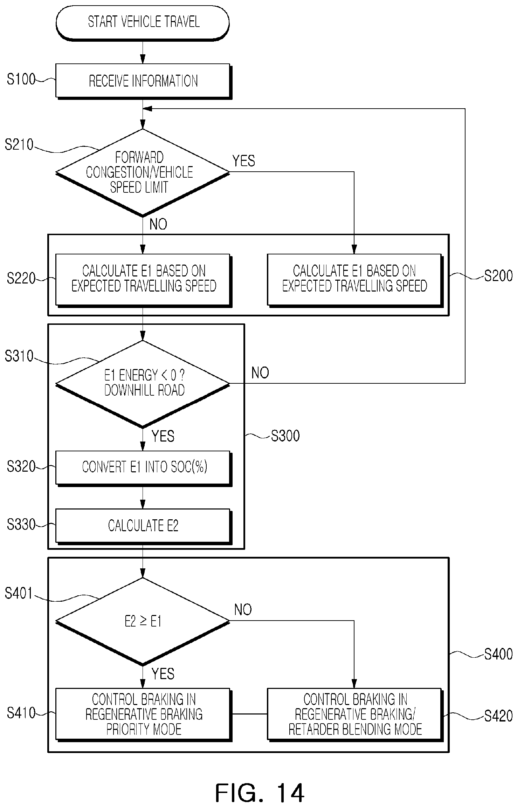

Hereinafter, a vehicle braking control method using blending of regenerative braking and auxiliary braking will be described with reference to FIGS. 14 to 21. In the present disclosure, a description of a vehicle braking control method using blending of regenerative braking and auxiliary braking and a description of a vehicle braking control apparatus using blending of regenerative braking and auxiliary braking may complement each other or may be applied in common, unless the descriptions are mutually exclusive. Accordingly, a repeated description may be omitted. Hereinafter, main processes of the vehicle braking control method using blending of regenerative braking and auxiliary braking will be described.

FIG. 14 is a flowchart of a vehicle braking control method using blending of regenerative braking and auxiliary braking according to an example embodiment of the present disclosure.

Referring to FIGS. 1 and 14, a vehicle braking control method using blending of regenerative braking and auxiliary braking according to an example embodiment of the present disclosure may be performed, for example, by the vehicle braking control apparatus 50.

In FIG. 14, the vehicle braking control method using blending of regenerative braking and auxiliary braking may include an information reception step S100, a first energy determination step S200, and a second energy determination step S300.

In the information reception step S100, the vehicle braking control apparatus 50 may receive vehicle travel information VDI. For example, the vehicle travel information VDI may include at least one of vehicle state information VSI and navigation information NVI. As described above, the vehicle state information VSI may include a vehicle weight, a vehicle speed, an auxiliary braking operation state, and a speed maintenance function operation state when a vehicle travels. The navigation information NVI may include a gradient of a current travel road, a travel length, a travelling speed (V1), travel time (Td), and vehicle speed limit information and forward congestion information on a travel road, and the vehicle state information VSI and the navigation information NVI are not limited to the above-described examples.

In the first energy determination step S200, the vehicle braking control apparatus 50 may determine, based on the vehicle travel information VDI, expected charging energy (E1) on a travel road.

In the second energy determination step S300, the vehicle braking control apparatus 50 may determine, based on the vehicle travel information VDI, chargeable energy (E2) available by regenerative braking when a current travel road is a downhill road.

In addition, the vehicle braking control method of the present disclosure may include a vehicle braking control step S400.

In the vehicle braking control step S400, the vehicle braking control apparatus 50 may compare the expected charging energy (E1) with the chargeable energy (E2), may determine one of a blending mode of blending an amount of operation of regenerative braking and an amount of operation of auxiliary braking or a regenerative braking priority mode according to a result of comparison (S401), and may control vehicle braking on the current travel road according to the determined braking mode (S410 and S420).

Referring to FIG. 14, the first energy determination step S200 may include a speed limit determination step S210, and an expected charging energy determination step S220.

In the speed limit determination step S210, the vehicle braking control apparatus 50 may determine, based on the vehicle state information VSI and the navigation information NVI, whether there is forward congestion or a vehicle speed limit.

In the expected charging energy determination step S220, the vehicle braking control apparatus 50 may calculate, based on an actual travelling speed (V1) or an expected travelling speed (V2), the expected charging energy (E1) depending on whether there is the forward congestion or the vehicle speed limit.

Referring to FIG. 14, the second energy determination step S300 may include a downhill determination step S310, an SOC conversion step S320, and a chargeable energy calculation step S330.

In the downhill determination step S310, the vehicle braking control apparatus 50 may determine the current travel road as a downhill road when a value of the expected charging energy (E1) is less than or equal to zero.

In the SOC conversion step S320, the vehicle braking control apparatus 50 may convert the expected charging energy (E1) into an SOC(%) (e.g., wherein the SOC(%) = (a total amount of battery charging energy/a capacity of a vehicle battery)* 100) when the current travel road is the downhill road.

In the chargeable energy calculation step S330, the vehicle braking control apparatus 50 may calculate the chargeable energy (E2) using a maximum SOC(SOCmax)(%) and a currentSOC(SOCcur)(%) of a battery of a vehicle.

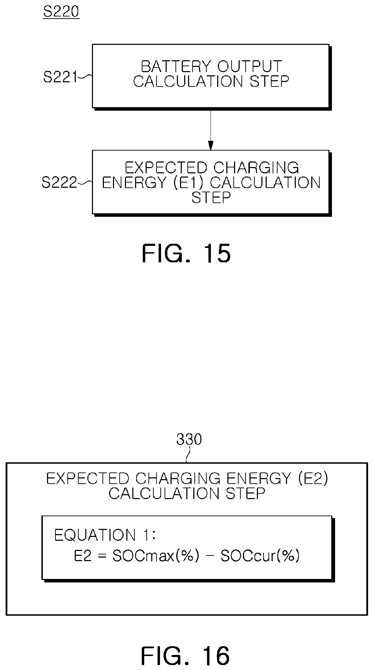

FIG. 15 is an exemplary diagram of an expected charging energy determination step.

Referring to FIG. 15, the expected charging energy determination step S220 may include a battery output calculation step S221 and an expected charging energy calculation step S222.

In the battery output calculation step S221, the vehicle braking control apparatus 50 may obtain, based on the vehicle state information VSI and the navigation information NVI, motor output (Mout) using a travelling speed (V) (V1 or V2) on a slope (for example, a downhill road) of a current travel road, for example, an actual travelling speed (V1) or an expected travelling speed (V2), and (e.g., required) traction force (Ft), and may obtain a (e.g., required) battery output (Bout) using the motor output (Mout).

In the expected charging energy calculation step S222, the vehicle braking control apparatus 50 may calculate the expected charging energy (E1) using the (e.g., required) battery output (Bout) and travel time (Td).

FIG. 16 is an exemplary diagram of a chargeable energy calculation step.

Referring to FIG. 16, in the chargeable energy calculation step S330, the vehicle braking control apparatus 50 may calculate the chargeable energy (E2) using Equation 1 by subtracting the current SOC(SOCcur)(%) from the maximum SOC(SOCmax)(%).

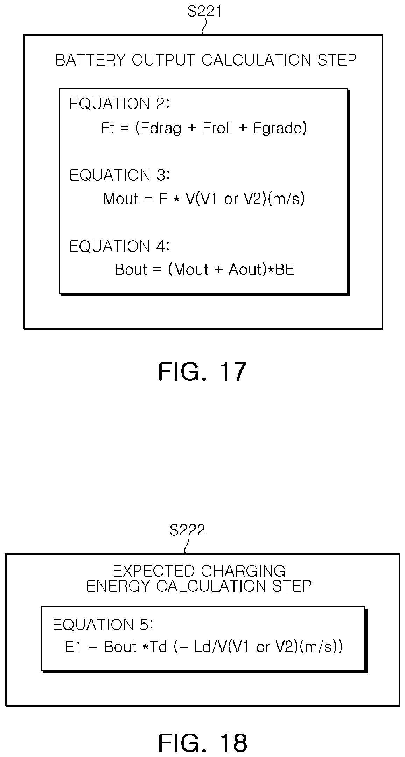

FIG. 17 is an exemplary diagram of a battery output calculation step.

Referring to FIG. 17, in the battery output calculation step S221, the vehicle braking control apparatus 50 may calculate the (e.g., required) battery output (Bout) using the traction force (Ft), motor output (Mout), and battery efficiency (BE).

FIG. 18 is an exemplary diagram of an expected charging energy calculation step.

Referring to FIG. 18, in the expected charging energy calculation step S222, the vehicle braking control apparatus 50 may calculate, based on the (e.g., required) battery output (Bout) and the travel time (Td), the expected charging energy (E1) according to Equation 5.

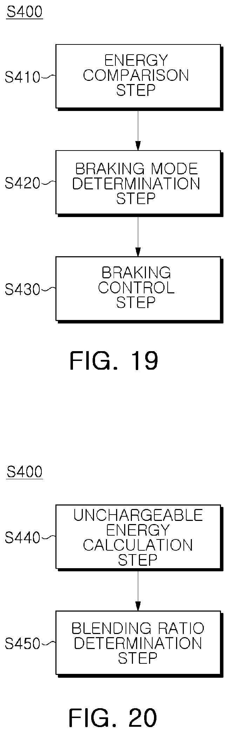

FIG. 19 is an exemplary diagram of a vehicle braking control step.

Referring to FIG. 19, the vehicle braking control step S400 may include an energy comparison step S410, a braking mode determination step S420, and a braking control step S430.

In the energy comparison step S410, the vehicle braking control apparatus 50 may compare the expected charging energy (E1) and the chargeable energy (E2) with each other.

In the braking mode determination step S420, the vehicle braking control apparatus 50 may determine the braking mode as the regenerative braking priority mode when a value of the expected charging energy (E1) is less than or equal to a value of the chargeable energy (E2), and may determine the braking mode as the blending mode when the value of the expected charging energy (E1) is greater than the value of the chargeable energy (E2), as a result of comparison performed by the energy comparison step S410.

In braking control step S430, the vehicle braking control apparatus 50 may control vehicle braking on the current travel road according to the determined braking mode.

FIG. 20 is an exemplary diagram of a vehicle braking control step.

Referring to FIG. 20, the vehicle braking control step S400 may include an unchargeable energy calculation step S440, and a blending ratio determination step S450.

In the unchargeable energy calculation step S440, the vehicle braking control apparatus 50 may obtain unchargeable energy (E3) by subtracting the chargeable energy (E2) from the expected charging energy (E1).

In the blending ratio determination step S450, the vehicle braking control apparatus 50 may determine a ratio of the chargeable energy (E2) to the unchargeable energy (E3) as a blending ratio in the blending mode for blending regenerative braking and auxiliary braking.

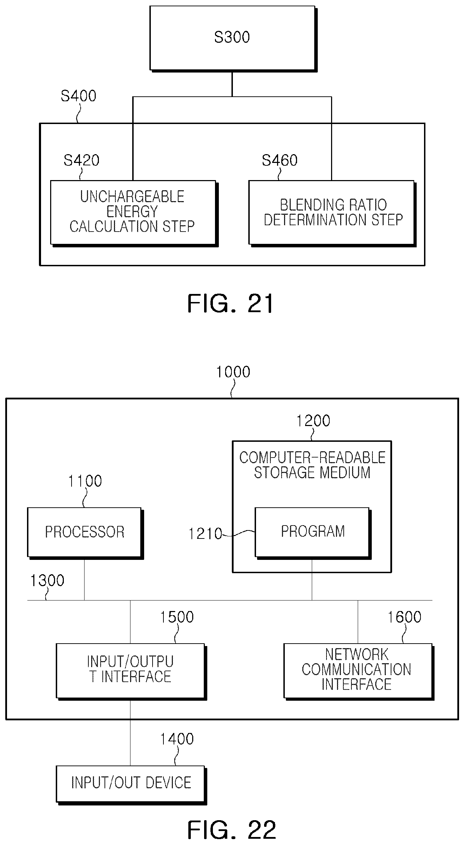

FIG. 21 is an exemplary diagram of a vehicle braking control step.

Referring to FIG. 21, in the vehicle braking control step S400, the vehicle braking control apparatus 50 may control an operation of the cooling system 600 for cooling the auxiliary braking device 500 operating in the blending mode (S460).

FIG. 22 is a block diagram of a computing device capable of fully or partially implementing an apparatus and method for controlling vehicle braking using blending of regenerative braking and auxiliary braking according to an example embodiment of the present disclosure.

As illustrated in FIG. 22, a computing device 1000 may include at least one processor 1100, a computer-readable storage medium 1200, and a communication bus 1300.

The processor 1100 may cause the computing device 1000 to operate according to the example embodiments described above. For example, the processor 1100 may execute one or more programs stored in the computer-readable storage medium 1200. The one or more programs may include one or more computer-executable instructions. When executed by the processor 1100, the one or more computer-executable instructions may be configured to cause the computing device 1000 to perform operations according to example embodiments.

The computer-readable storage medium 1200 may be configured to store the computer-executable instruction or program code, program data, and/or other suitable forms of information. A program 1210, stored in the computer-readable storage medium 1200, may include a set of instructions executable by the processor 1100. In an example embodiment, the computer-readable storage medium 1200 may be a memory (e.g., volatile memory, such as a random access memory, non-volatile memory, or any suitable combination thereof), one or more magnetic disk storage devices, optical disk storage devices, flash memory devices, other types of storage media that are accessible by the computing device 1000 and are capable of storing desired information, or any suitable combination thereof.

The communication bus 1300 may interconnect various other components of the computing device 1000, including the processor 1100 and the computer-readable storage medium 1200.

The computing device 1000 may also include one or more input/output interfaces 1500 providing an interface for one or more input/output devices 1400, and one or more network communication interfaces 1600. The input/output interface 1500 and the network communication interface 1600 may be connected to the communication bus 1300. The network may be one of a cellular network, such as global system for mobile communications (GSM), enhanced data rates for GSM evolution (EDGE), general packet radio service (GPRS), code division multiple access (CDMA), time division-CDMA (TD-CDMA), universal mobile telecommunications system (UMTS), or long-term evolution (LTE), or another cellular network.

The input/output device 1400 may be connected to other components of the computing device 1000 through the input/output interface 1500. The exemplary input/output device 1400 may include a pointing device (e.g., a mouse or trackpad), a keyboard, a touch input device (such as a touchpad or touchscreen), a voice or sound input device, input devices such as various types of sensor devices and/or photographing devices, and/or output devices such as a display device, a printer, a speaker, and/or a network card. The exemplary input/output device 1400 may be included in the computing device 1000 as a component included in the computing device 1000, or may be connected to the computing device 1000 as a device distinct from the computing device 1000.

Example embodiments of the present disclosure may include a program for performing the methods described herein on a computer, and a computer-readable recording medium including the program. The computer-readable recording medium may include, alone or in combination with program instructions, local data files, local data structures, and the like. The medium may be those designed and constructed for the purposes of the example embodiments, or may be available in the computer software arts. Examples of the computer-readable medium include magnetic media such as hard disks, floppy disks, and magnetic tape, optical media such as CD ROM discs and DVDs, magneto-optical media such as optical discs, and hardware devices that are specially configured to store and perform program instructions, such as read-only memory (ROM), random access memory (RAM), flash memory, and the like. Examples of the program may include both a machine code, such as a code produced by a compiler, and a higherlevel code that may be executed by the computer using an interpreter.

While example embodiments have been shown and described above, it will be apparent that modifications and variations could be made without departing from the scope of the present disclosure as defined by the appended claims.

## Claims

1. An apparatus for controlling vehicle braking using blending of regenerative braking and auxiliary braking, the apparatus comprising:

   an information input unit configured to receive vehicle travel information;
   a first energy determination unit configured to determine, based on the vehicle travel information, expected charging energy on a travel road;
   a second energy determination unit configured to determine, based on the vehicle travel information, chargeable energy available by regenerative braking, when a current travel road is a downhill road; and
   a vehicle control unit configured to control vehicle braking by comparing the expected charging energy with the chargeable energy, and determining a blending mode of blending an amount of operation of regenerative braking and an amount of operation of auxiliary braking as a braking mode according to a result of comparison.

2. The apparatus of claim 1, wherein the first energy determination unit includes:

   a speed limit determination unit configured to determine, based on the vehicle travel information including at least one of vehicle state information or navigation information, whether there is forward congestion or a vehicle speed limit; and
   an expected charging energy determination unit configured to determine the expected charging energy using a battery output obtained based on an actual travelling speed or an expected travelling speed, depending on whether there is the forward congestion or the vehicle speed limit.

3. The apparatus of claim 2, wherein the expected charging energy determination unit includes:

a battery output calculation unit configured to obtain, based on the vehicle travel information, motor output using an actual travelling speed or an expected travelling speed and traction force on a slope of the current travel road, and to obtain a battery output using motor output, auxiliary machinery output, and battery efficiency; and

an expected charging energy calculation unit configured to obtain the expected charging energy using the battery output and travel time.

4. The apparatus of anyone of claims 1-3, wherein the second energy determination unit includes:

a downhill determination unit configured to determine a current travel road as a downhill road when a value of the expected charging energy is less than or equal to zero;

a state of charge (SOC) conversion unit configured to convert the expected charging energy into an SOC(%) when the current travel road is the downhill road; and

a chargeable energy calculation unit configured to obtain the chargeable energy using a maximum SOC(%) and a current SOC(%) of a battery of a vehicle.

5. The apparatus of claim 4, wherein the chargeable energy calculation unit is configured to calculate the chargeable energy by subtracting the current SOC(%) from the maximum SOC(%) expressed by

$$E2 = SOCmax(\%) - SOCcur(\%),$$

wherein SOCmax is a maximum SOC(%) and SOCcur is a current SOC(%).

6. The apparatus of claim 3, or of claim 4 or 5 provided that in combination with claim 3, wherein the battery output calculation unit is configured to calculate the battery output using traction force, motor output, and the battery efficiency, using the expressions of:

$$Ft \geq ( Fdrag + Froll + Fgrade );$$

$$Mout = Ft * (V1 \text{ or } V2)(m/s); \text{ and}$$

$$Bout = (Mout + Aout) * BE,$$

wherein Ft is traction force, Fdrag is air drag force, Froll is rolling resistance force, and Fgrade is gradability force received by a vehicle travelling on a road having an inclination angle θ, Mout is motor output, V is a travelling speed, V1 is an actual travelling speed and V2 is an expected travelling speed, Bout is a battery output, Aout is auxiliary machinery output, and BE is battery efficiency.

7. The apparatus of claim 6, wherein the expected charging energy calculation unit is configured to calculate, based on the battery output and travel time, the expected charging energy is expressed by:

$$E1 = Bout * Td (= Ld/V(V1 \text{ or } V2))(m/s)),$$

wherein E1 is expected charging energy, Bout is a battery output, Td is a travel distance, Ld is a downhill distance, V is a travelling speed, V1 is an actual travelling speed and V2 is an expected travelling speed.

8. The apparatus of anyone of claims 1-7, wherein the vehicle control unit includes:

an energy comparison unit configured to compare the expected charging energy and the chargeable energy;

a braking mode determination unit configured to determine the braking mode as a regenerative braking priority mode when a value of the expected charging energy is less than or equal to a value of the chargeable energy, and to determine the braking mode as the blending mode when the value of the expected charging energy is greater than the value of the chargeable energy, as a result of comparison performed by the energy comparison unit; and

a braking control unit configured to control vehicle braking on the current travel road according to the determined braking mode.

9. The apparatus of claim 8, wherein the vehicle control unit further includes:

   an unchargeable energy calculation unit configured to obtain unchargeable energy by subtracting the chargeable energy from the expected charging energy; and
   a blending ratio determination unit configured to determine a ratio of the chargeable energy to the unchargeable energy as a blending ratio in the blending mode for blending regenerative braking and auxiliary braking.

10. The apparatus of claim 8 or 9, wherein the vehicle control unit is configured to control an operation of a cooling system for cooling an auxiliary braking device operating while braking is performed in the blending mode.

11. A method for controlling vehicle braking using blending of regenerative braking and auxiliary braking, the method comprising:

   an information reception step of receiving vehicle travel information;
   a first energy determination step of determining, based on the vehicle travel information, expected charging energy on a travel road;
   a second energy determination step of determining, based on the vehicle travel information, chargeable energy available by regenerative braking, when a current travel road is a downhill road; and
   a vehicle braking control step of controlling vehicle braking by comparing the expected charging energy with the chargeable energy, and determining a blending mode of blending an amount of operation of regenerative braking and an amount of operation of auxiliary braking as a braking mode according to a result of comparison.

12. The method of claim 11, wherein the first energy determination step includes:

   a speed limit determination step of determining, based on the vehicle travel information including at least one of vehicle state information or navigation information, whether there is forward congestion or a vehicle speed limit; and
   an expected charging energy determination step of determining the expected charging energy using a battery output obtained based on an actual travelling speed or an expected travelling speed, depending on whether there is the forward congestion or the vehicle speed limit.

13. The method of claim 12, wherein the expected charging energy determination step includes:

   a battery output calculation step of obtaining, based on the vehicle travel information, motor output using an actual travelling speed or an expected travelling speed and traction force on a slope of the current travel road, and obtaining a battery output using motor output, auxiliary machinery output, and battery efficiency; and
   an expected charging energy calculation step of obtaining the expected charging energy using the battery output and travel time.

14. The method of anyone of claims 11-13, wherein the second energy determination step includes:

   a downhill determination step of determining the current travel road as the downhill road when a value of the expected charging energy is less than or equal to zero;
   an SOC conversion step of converting the expected charging energy into an SOC(%) when the current travel road is the downhill road; and
   a chargeable energy calculation step of calculating the chargeable energy using a maximum SOC(%) and a current SOC(%) of a battery of a vehicle.

15. The method of claim 14, wherein the chargeable energy calculation step includes calculating the chargeable energy by subtracting the current SOC(%) from the maximum SOC(%) using the expression of

$$E2 = SOCmax(\%) - SOCcur(\%),$$

   wherein SOCmax is a maximum SOC(%) and SOCcur is a current SOC(%),
   wherein the battery output calculation step includes calculating the battery output using traction force, motor output, and the battery efficiency, using the expressions of:

$$Ft \geq Fdrag + Froll + Fgrade;$$

$$Mout = Ft * (V1 \text{ or } V2)(m/s);$$

and

$$Bout = (Mout + Aout) * BE,$$

wherein Ft is traction force, Fdrag is air drag force, Froll is rolling resistance force, and Fgrade is gradability force received by a vehicle travelling on a road having an inclination angle $\theta$, Mout is motor output, V is a travelling speed, V1 is an actual travelling speed and V2 is an expected travelling speed, Bout is a battery output, Aout is auxiliary machinery output, and BE is battery efficiency,

wherein the expected charging energy calculation step includes calculating, based on the battery output and travel time, the expected charging energy expressed by

$$E1 = Bout * Td (Td = Ld/V(V1 \text{ or } V2))(m/s),$$

Wherein E1 is expected charging energy, Bout is a battery output, Td is a travel distance, Ld is a downhill distance, V is a travelling speed, V1 is an actual travelling speed and V2 is an expected travelling speed.

FIG. 1

200

FIRST ENERGY DETERMINATION UNIT

210

SPEED LIMIT
DETERMINATION
UNIT

220

EXPECTED CHARGING
ENERGY DETERMINATION
UNIT
(E1 = f(V, Bout))

→ E1

## FIG. 2

220

EXPECTED CHARGING ENERGY DETERMINATION UNIT

221

BATTERY OUTPUT
CALCULATION UNIT
(Bout = f(Mout,
Aout,Be))

222

EXPECTED CHARGING
ENERGY CALCULATION
UNIT
(E1 = f(Bout,Td))

→ E1

## FIG. 3

FIG. 4

330

CHARGEABLE ENERGY CALCULATION UNIT

EQUATION 1:
$$E2 = SOCmax(\%) - SOCcur(\%)$$

## FIG. 5

221

BATTERY OUTPUT CALCULATION UNIT

EQUATION 2:
$$Ft = (Fdrag + Froll + Fgrade)$$

EQUATION 3:
$$Mout = Ft * V(V1\ or\ V2)(m/s)$$

EQUATION 4:
$$Bout = (Mout + Aout)*BE$$

## FIG. 6

| TRAVEL RESISTANCE FORCE | | |

$$F_{drag} = \tfrac{1}{2} \rho Cd \, A \, V^2$$

$$F_{roll} = Cr \, mg \cos\theta$$

$$F_{grade} = mg \sin\theta$$

$$ma = F_{traction} - (F_{drag} + F_{roll} + F_{grade})$$

$F_{traction}$ : traction  $F_{drag}$ : air drag

$F_{roll}$ : rolling resistance  $F_{grade}$ : gradability

| REQUIRED CONSTANT | MEANING | VALUE (Ex) |
|---|---|---|
| P | AIR DENSITY | $1.225 \, kg/m^2$ |
| Cd | AIR RESISTANCE COEFFICIENT | 0.5776 |
| A | Front Area | 10.21 |
| V | TRAVELLING SPEED | 80kph |
| Cr | Rolling Resistance Coefficient | 0.00567 |

FIG. 7

222

EXPECTED CHARGING ENERGY CALCULATION UNIT

EQUATION 5:
$E1 = Bout *Td (= Ld/V(V1 \text{ or } V2)(m/s))$

FIG. 8

400

VEHICLE CONTROL UNIT

| 410 | 420 | 430 |
|---|---|---|
| ENERGY COMPARISON UNIT | BRAKING MODE DETERMINATION UNIT | BRAKING CONTROL UNIT |

FIG. 9

400

VEHICLE CONTROL UNIT

440

UNCHARGEABLE
ENERGY
CALCULATION UNIT
(E3 = E1 − E2)

450

BLENDING RATIO
DETERMINATION UNIT
(BR => E2 : E3)

## FIG. 10

RDTP(%)    RATP(%)    CT(°C)

125    125    100

G11

G13

G12

−125    −125    50

07:01.925    07:10    07:20    07:30    07:40    07:52.695

t(m:s)

## FIG. 11

FIG. 12A

REGENERATIVE BRAKING/RETARDER
BLENDING OPERATION

FULL CHARGING BY
REGENERATIVE BRAKING
(=UNAVAILABLE RETARDER
DUE TO OVERHEATING
OF RETARDER)

DEP

FIG. 12B

400 — VEHICLE CONTROL UNIT

AUXILIARY BRAKING DEVICE — 500

COOLING SYSTEM — 600

FIG. 13

FIG. 14

S220

```
         ┌─────────────────────────────┐
S221 ─│  BATTERY OUTPUT             │
         │  CALCULATION STEP           │
         └─────────────────────────────┘
                        │
                        ▼
         ┌─────────────────────────────┐
         │  EXPECTED CHARGING          │
S222 ─│  ENERGY (E1) CALCULATION    │
         │  STEP                       │
         └─────────────────────────────┘
```

## FIG. 15

330

```
┌───────────────────────────────────────────┐
│  EXPECTED CHARGING ENERGY (E2)            │
│  CALCULATION STEP                         │
│  ┌─────────────────────────────────────┐  │
│  │  EQUATION 1:                        │  │
│  │    E2 = SOCmax(%) − SOCcur(%)       │  │
│  └─────────────────────────────────────┘  │
└───────────────────────────────────────────┘
```

## FIG. 16

S221

BATTERY OUTPUT CALCULATION STEP

EQUATION 2:
    Ft = (Fdrag + Froll + Fgrade)

EQUATION 3:
    Mout = F * V(V1 or V2)(m/s)

EQUATION 4:
    Bout = (Mout + Aout)*BE

FIG. 17

S222

EXPECTED CHARGING
ENERGY CALCULATION STEP

EQUATION 5:
    E1 = Bout *Td (= Ld/V(V1 or V2)(m/s))

FIG. 18

S400

S410~ | ENERGY
COMPARISON
STEP |

S420~ | BRAKING MODE
DETERMINATION
STEP |

S430~ | BRAKING
CONTROL
STEP |

## FIG. 19

S400

S440~ | UNCHARGEABLE
ENERGY
CALCULATION
STEP |

S450~ | BLENDING RATIO
DETERMINATION
STEP |

## FIG. 20

S300

S400

S420
UNCHARGEABLE
ENERGY
CALCULATION STEP

S460
BLENDING RATIO
DETERMINATION STEP

FIG. 21

1000

1200
COMPUTER-READABLE
STORAGE MEDIUM

1100
PROCESSOR

1210
PROGRAM

1300

1500
INPUT/OUTPUT INTERFACE

1600
NETWORK
COMMUNICATION
INTERFACE

1400
INPUT/OUT DEVICE

FIG. 22

**EP 4 714 717 A1**

EUROPEAN SEARCH REPORT

Application Number

EP 25 15 7392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2001 054202 A (NISSAN MOTOR) 23 February 2001 (2001-02-23) | 1-9, 11-15 | INV. B60L3/12 |
| A | * paragraphs [0005], [0016], [0018], [0020] - [0025], [0028], [0036] - [0043] * | 10 | B60L7/22 B60L7/26 B60L15/20 B60L58/15 |
| X | US 2024/198808 A1 (HUSBERG TOBIAS [SE] ET AL) 20 June 2024 (2024-06-20) | 1,4, 8-11,14 | B60W30/18 |
| A | * paragraphs [0003] - [0021], [0033] - [0042], [0076] - [0085] * | 2,3,5-7, 12,13,15 | |
| X | US 2024/025266 A1 (LI DONGXU [US]) 25 January 2024 (2024-01-25) | 1,4,8,9, 11,14 | |
| A | * paragraphs [0003], [0004], [0020] - [0027] * | 2,3,5-7, 10,12, 13,15 | |

TECHNICAL FIELDS
SEARCHED        (IPC)

B60L
B60W

The present search report has been drawn up for all claims

| Place of search | Date of completion of the search | Examiner |
|---|---|---|
| The Hague | 30 July 2025 | Morlando Cerveró, I |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 15 7392

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2025

| Patent document cited in search report | | Publication date | Patent family member(s) | | Publication date |
|---|---|---|---|---|---|
| JP 2001054202 | A | 23-02-2001 | JP 3687429 B2 | | 24-08-2005 |
| | | | JP 2001054202 A | | 23-02-2001 |
| US 2024198808 | A1 | 20-06-2024 | EP 4385793 A1 | | 19-06-2024 |
| | | | US 2024198808 A1 | | 20-06-2024 |
| US 2024025266 | A1 | 25-01-2024 | CN 117429270 A | | 23-01-2024 |
| | | | DE 102022134839 A1 | | 25-01-2024 |
| | | | US 2024025266 A1 | | 25-01-2024 |

EPO FORM P0459

For more details about this annex : see Official Journal of the European Patent Office, No. 12/82

# EP 4 714 717 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240129272